# EUROPÄISCHE PATENTSCHRIFT

(11) **EP 3 324 076 B1**
(45) Veröffentlichungstag und Bekanntmachung des Hinweises auf die Patenterteilung: **14.04.2021**
(21) Anmeldenummer: 17200586.0
(22) Anmeldetag: 08.11.2017
(51) Int. Cl.: F16H 13/08, F16H 57/08, F16H 1/28

(54) **WÄLZLAGERGETRIEBE**
ROLLING BEARING TRANSMISSION
PALIER À ROULEMENT POUR UN ENGRENAGE

(30) Priorität: 17.11.2016 DE 102016222689
(43) Veröffentlichungstag der Anmeldung: 23.05.2018
(73) Patentinhaber: Aktiebolaget SKF, 41 550 Göteborg (SE)
(72) Erfinder: Stephan, Bernd, 97422 Schweinfurt (DE)
(74) Vertreter: Kohl, Thomas

(56) Entgegenhaltungen:
- EP-B1- 2 533 994
- DE-A1- 1 500 467
- DE-A1- 2 235 448
- DE-A1-102010 021 598
- DE-T5-112007 000 565
- US-A- 5 667 455

## Beschreibung

Die Erfindung betrifft ein Wälzlagergetriebe.

In vielen Bereichen der Technik gibt es das Erfordernis, dass eine Mechanik zum Ausführen einer möglichst hohen Spielzahl von schnellen Verschwenkbewegungen ausgelegt sein muss, wobei insbesondere in Verbindung mit einem vergleichsweise stark drehzahluntersetzen Antrieb die Mechanik gleichzeitig langlebig, robust, einfach und preisgünstig sein soll.

Aus der DE 10 2010 021 598 A1 ist eine Antriebsvorrichtung für eine hydraulische Pumpe bekannt, bei der die Funktion eines Planetenzahnradgetriebes durch eine Wälzlageranordnung ersetzt ist, wodurch die Wälzlageranordnung drei radial übereinander angeordnete Abrollflächenelemente mit Abrollbahnen für Wälzkörper aufweist, wobei zwischen dem ersten und dem zweiten und dem zweiten und dem dritten jeweils ein Satz von Wälzkörpern angeordnet ist, aber diese Wälzlageranordnung aufgrund ihrer Ersatzfunktion keine, in einem Zahnradgetriebe zusammenwirkende Zahnradgetriebeelemente ausbildet oder lagert.

Aus der DE 1 500 467 A1 ist ein Antrieb für eine Schubumkehreinrichtung von Strahltriebwerden, aus der DE 22 35 448 A1 ist eine Einrichtung zur Lastverteilung der Zahnkräfte von Planetenrädern eines Umlaufrädergetriebes und aus der DE 11 2007 000 565 T5, EP 2 533 994 B1 und US 5 667 455 A sind Radnaben für Fahrzeugräder mit integriertem Getrieben bekannt, wobei alle diese Vorrichtungen gemeinsam haben, dass sie drei Abrollflächenelemente mit Abrollbahnen für Wälzkörper aufweisen, wobei zwischen dem ersten und dem zweiten und dem zweiten und dem dritten jeweils ein Satz von Wälzkörpern angeordnet ist, diese Abrollflächenelemente in einem Zahnradgetriebe zusammenwirkende Zahnradgetriebeelemente ausbilden oder lagern, und die drei Abrollflächenelemente einen zueinander radial geschichteten Aufbau aufweisen.

Eine Aufgabe der Erfindung ist es, diesbezüglich eine Verbesserung zu schaffen.

Diese Aufgabe wird durch den Gegenstand des Anspruchs 1 gelöst. Vorteilhafte Ausgestaltungen sind in den Unteransprüchen beschrieben.

Das Wälzlagergetriebe nach Anspruch 1 bietet dabei folgende Vorteile: Die reine Wälzlagerfunktion als solche und die hohe Antriebsuntersetzung sind sozusagen in einer Baueinheit zusammengeführt. Mit dem erfindungsgemäßen Wälzlagergetriebe sind auch vergleichsweise klein-winklige, schnelle, widerholungshäufige Verschwenkbewegungen realisierbar, wohingegen die internen Wälzpartner mit Vorteil einer wirklichen Rotation unterliegen und nicht nur in an sich unerwünschter Weise ständig gegeneinander hin und her bewegt werden, was bekannte Probleme wie z.B. Brinelling hervorrufen kann. Dadurch kann mit Vorteil auch eine Fettschmierung der Wälzpartner eingesetzt werden, wodurch eine aufwändige Ölschmierung nicht erforderlich ist. Das erfindungsgemäße Wälzlagergetriebe kann aber natürlich aus welchen Gründen auch immer ölgeschmiert eingesetzt und betrieben werden. Mit dem erfindungsgemäßen Wälzlagergetriebe sind weiterhin große Über- bzw. Untersetzungen von 1:50, 1:100 oder auch mehr erzielbar. Damit eignet sich die Erfindung aber auch besonders für die Industrierobotertechnik insbesondere für die Gelenkbereiche von Roboterarmen, wo hohe Untersetzungen gefordert sind und lebenszeitlang häufig, schnelle Verschwenkbewegungen auszuführen sind. Damit eignet sie sich aber auch als Pitchverstellung bei den Blättern von Windkraftanlagen.

Weitere Vorteile, Merkmale und Einzelheiten der Erfindung ergeben sich aus dem im Folgenden beschriebenen Ausführungsbeispielen der Erfindung anhand der Figuren. Dabei zeigen:
Figur 1 einen Längsschnitt durch eine obere Hälfte eines Wälzlagergetriebes mit radial übereinander angeordneten Abrollflächenelementen,
Figur 2 einen Querschnitt durch ein ähnliches Wälzlagergetriebe wie das der Figur 1, und
Figur 3 einen Längsschnitt durch ein Wälzlagergetriebe gemäß der Erfindung mit zwei axial nebeneinander angeordneten Abrollflächenelementen.

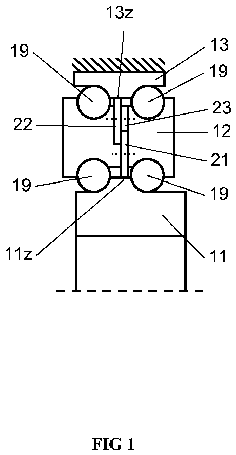

Die Figur 1 zeigt einen Längsschnitt durch eine obere Hälfte eines Wälzlagergetriebes, wobei lediglich die Schnittflächen ohne Schraffur dargestellt sind. Das Wälzlagergetriebe umfasst dabei eine erstes inneres Abrollflächenelement 11, ein zweites, mittleres Abrollflächenelement 12 und ein drittes, äußeres Abrollflächenelement 13, die alle ring- bzw. hohlzylinderartig ausgebildet sind. Das äußere und das mittlere Abrollflächenelement 13 und 12 sind dabei zueinander nach Art eines zweireihigen Schrägkugellagers ausgebildet. Andere Lagerbauarten, beispielsweise Rillenkugellager und/oder Kegelrollenlager sind natürlich auch verwendbar. So sind die beiden Abrollflächenelemente 13 und 12 beispielsweise aus einem Wälzlagerstahl ausgebildet und umfassen im Bereich der beiden Reihen von als Kugeln 19 ausgebildeten Wälzkörpern gehärtete, geschliffen und/oder gehonte oder vergleichbar erzeugte Abrollbahnen, auf denen die Kugeln 19 abrollen. Die Kugeln 19 jeder der beiden Reihen sind dabei in einem beispielsweise aus Kunststoffmaterial hergestellten, nicht dargestellten Käfig angeordnet bzw. eingeschnappt, der ein gegenseitiges Berühren der Kugeln 19 verhindert. Die Kugeln 19 können ebenfalls aus Wälzlagerstahl, aber auch aus anderen Metall- insbesondere Eisenlegierungen, aus Keramik oder anderen geeigneten Materialien ausgebildet sein. Ferner ist der die Kugeln 19 beinhaltende Wälzkörperraum nach axial außen hin durch zwei links und rechts an einem der Abrollflächenelemente 13 oder 12 oder zwischen den Abrollflächenelementen 13 und 12 angeordnete ringförmige Dichtelemente abgedichtet, wobei es sich um berührende Dichtungen mit einer Dichtlippe als auch um Spaltdichtungen beispielsweise sogenannte Deckscheiben handeln kann. Die Schmierung innerhalb des abgedichteten Wälzkörperraumes ist dabei eine bevorzugt auf die gesamte Lebensdauer ausgelegte Fettschmierung.

Das mittlere und das innere Abrollflächenelement 12 und 11 sind zueinander wiederum nach Art eines zweireihigen Schrägkugellagers ausgebildet, so dass das im vorausgehenden Absatz Ausgeführt entsprechend gilt.

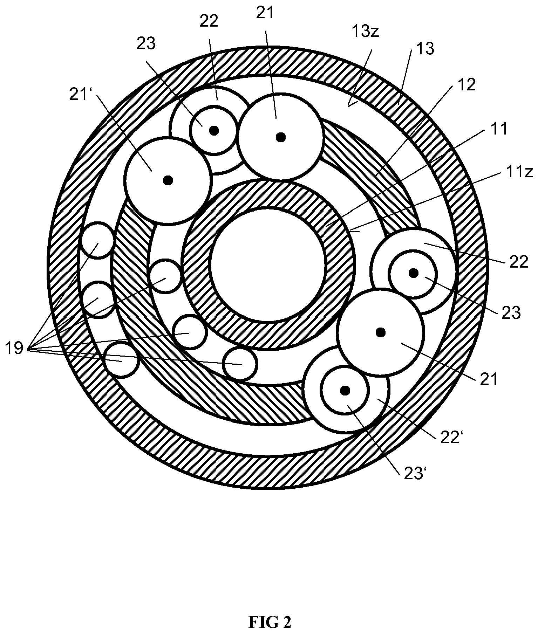

Das Wälzlagergetriebe ist weiterhin zur Realisierung der Getriebefunktion wie folgt ausgebildet: Das innere Abrollflächenelement 11 ist im Bereich 11z ein Zahnrad ausbildend gestaltet. Dieser Zahnradbereich 11z kämmt mit einem ersten Zahnrad 21, das im mittleren Abrollflächenelement 12 drehbar gelagert ist. Das äußere Abrollflächenelement 13 ist im Bereich 13z ein innenverzahntes Hohlzahnrad ausbildend gestaltet. Dieser Zahnradbereich 13z kämmt mit einem zweiten Zahnrad 22, das ebenfalls im mittleren Abrollflächenelement 12 drehbar gelagert ist. Weiterhin ist zusammen mit dem zweiten Zahnrad 22 ein drittes Zahnrad 23 drehbar im mittleren Abrollflächenelement 12 angeordnet, wobei das zweite und dritte Zahnrad 22 und 23 drehfest miteinander verbunden sind, beispielsweise indem sie einstückig und materialeinheitlich als ein Doppelzahnrad ausgebildet sind. Das Wälzlagergetriebe kann weitere erste, zweite und dritte im mittleren Abrollflächenelement 12 gelagerte Zahnräder umfassen, was detaillierter später zur Figur 2 beschrieben wird; für die weitere Funktionsbeschreibung des Wälzlagergetriebes kann dies aber zunächst außen vor bleiben.

Dadurch dass die Zahnräder 21, 22 und 23 wie auch die Zahnradbereiche 11z und 13z sozusagen zwischen den linken und rechten Wälzkörperreihen angeordnet sind, liegen sie wie die Kugeln 19 innerhalb der nach außen hin abgedichteten und fettgeschmierten Wälzkörperräume. Dies wirkt sich günstig auf den Zahnradbetrieb und die Lagerung der Zahnräder 21, 22 und 23 innerhalb des mittleren Abrollflächenelements 12 aus, da eine Schmierung der Zahnräderlagerungen und der Zahneingriffe ohnehin erforderlich wäre. Weiterhin ist die Anordnung der Zahnradbereiche 11z und 13z zwischen den linken und rechten Abrollbahnen für die Kugeln 19 günstig, da bei einem ohnehin notwendigen Härten der Abrollbahnen die dazwischenliegenden Zahnradbereiche 11z und 13z gleich mitgehärtet werden können, da ab einem gewissen Belastungsgrad die Zähne ohnehin gehärtet werden müssten. Dies trifft natürlich auch auf die Zähne der Zahnräder 21, 22 und 23 zu, insofern sie aus einem härtbaren Material, z.B. einem härtbaren Stahl ausgebildet sind. Schließlich ist das mittlere Abrollflächenelement 12 wegen der in dessen Mitte angeordneten und gelagerten Zahnräder 21, 22 und 23 wenigstens zunächst zweistückig aus einem linken und einem rechten Ring aufgebaut, wobei die Ringe fest miteinander verbindbar ausgebildet sind. Zum Beispiel kann man durch eine Schraubverbindung die beiden Ringe mit den integrierten Zahnrädern 21, 22 und 23 und deren Lagerung, alle Teile steif miteinander verschrauben. Die Lagerung der Zahnräder 21, 22 und 23 kann durch Nadellager oder Nadelkränze oder durch Gleitlagerung auf einem Bolzen platzsparend konstruiert werden. Die Zahnräder 21, 22 und 23 können statt zwischen den beiden Abrollbahnen auch axial neben der Lagerung angebracht werden.

Das äußere Abrollflächenelement 13 ist beispielsweise durch entsprechende Befestigung in einem Gehäuse, die wenigstens als Bezugssystem für die anderen Abrollflächenelemente 12 und 11 nicht zum Verschwenken oder Drehen vorgesehene Basis. Der Antrieb beispielsweise über einen Elektroantriebsmotor erfolgt am mittleren Abrollflächenelement 12 und der Abtrieb erfolgt über das innere Abrollflächenelement 11, nachdem der Antrieb hin zur Abtriebsseite eine deutliche Untersetzung der Drehzahl erfahren hat. Der Elektromotor kann sehr preiswert und verschleißfrei ohne eine weitere Lagerung mit dem Getriebe kombiniert werden. Hierzu wird an der Antriebsseite am mittleren Abrollflächenelement 12 des Wälzlagergetriebes ein rohrförmiger Rotor und an der gleichen Seite am äußeren Abrollflächenelement 13 der Stator des Elektromotors angebracht. Auf der dem Getriebe abgewandten Seite des Elektromotors kann bei Bedarf sowohl eine Sicherheitsbremse als auch ein Drehwinkelsensor angebracht werden.

Die Untersetzung ist dabei dreistufig als Differentialgetriebe ausgebildet, wobei in jeder der drei Stufen eine Über- bzw. Untersetzung stattfindet, die sich aus dem Durchmesserverhältnis der in der jeweiligen Stufe zusammenwirkenden Zahnräder bzw. deren Zähnezahlverhältnis ergibt. In der ersten Stufe findet eine Übersetzung der Drehzahl des angetriebenen mittleren Abrollflächenelements 12 über den stehenden Hohlzahnradbereich 13z am äußeren Abrollflächenelement 13 auf die Drehzahl des zweiten Zahnrades 22 um seine eigene Achse statt. Das Durchmesserverhältnis zwischen dem zweiten Zahnrad 22 und dem Hohlzahnradbereich 13z kann - immer in Abhängigkeit vom zur Verfügung stehenden Raum für das Wälzlagergetriebe - beispielsweise auf 1:4 eingestellt werden. In der zweiten Stufe vom dritten Zahnrad 23, das ja mit dem zweiten Zahnrad 22 auf einer Achse drehsteif verbunden ist und damit mitdreht, auf das erste Zahnrad 21 wird beispielsweise ein Durchmesserverhältnis von 50 mm zu 25 mm also von 1:2 oder mehr eingestellt. Auch in der dritten Stufe vom ersten Zahnrad 21 auf den Zahnradbereich 11z des inneren Abrollflächenelements 11 kann eine Untersetzung von 1:2 z.B. 50 mm zu 100 mm erzielt werden, so dass als Differential zusammen sich eine Übersetzung von Null ergibt. Das heißt, dass das äußere und das innere Abrollflächenelement 13 und 11 bei beliebiger Drehzahl des mittleren Abrollflächenelements 12 sich nicht drehen. Übersetzung und Untersetzung heben sich zu Null auf. Durch geringfügige Änderung der Durchmesser und Übersetzungen der Zahnräder lassen sich somit hohe Übersetzungsverhältnisse von grösser als 1:50 in beide Drehrichtungen zwischen angetrieben und abtreibenden Abrollflächenelement 11, 12 und/oder 13 erreichen.

Somit lassen sich mit dieser Anordnung mit dem Vorteil, dass alle Teile rotieren, und damit mit dem Vorteil guter Schmierverhältnisse hohe Untersetzungen erzielen. Falls die dargestellte dreistufige Untersetzung nicht ausreicht kann natürlich auch eine höherstufige Untersetzung eingesetzt werden, wobei auch Wälzlagergetriebe mit mehr als drei Abrollflächenelementen möglich sind, ggf. ist aber sogar schon eine zweistufige Übersetzung, beispielsweise unter Weglassung des dritten Zahnrades ausreichend.

Mit dem Wälzlagerdiffenrentialgetriebe lassen sich damit auch vergleichsweise kleinwinklige Verschwenkbewegungen zwischen dem inneren Abrollflächenelements 11 und dem äußeren Abrollflächenelement 13 unter einem antriebstechnisch günstigen großen Untersetzungsverhältnis erzielen, bei dem gleichzeitig die eingesetzten Wälzpartner mit Vorteil einer wirklichen Rotation unterliegen und nicht nur in an sich unerwünschter Weise ständig hin und her bewegt werden, was bekannte Probleme wie z.B. Brinelling hervorrufen kann. Dadurch kann mit Vorteil auch eine Fettschmierung der Wälzpartner eingesetzt werden, wodurch eine aufwändige Ölschmierung nicht erforderlich ist. Das Wälzlagergetriebe kann aber natürlich aus welchen Gründen auch immer ölgeschmiert eingesetzt und betrieben werden.

Damit eignet es sich aber auch besonders für die Robotertechnik insbesondere für die Gelenkbereiche von Roboterarmen, wo hohe Untersetzungen gefordert sind und dauerhaft Verschwenkbewegungen ausgeführt werden müssen.

Die Figur 2 zeigt einen Querschnitt durch ein ähnliches Wälzlagergetriebe wie das der Figur 1. Dabei ist der Schnitt in etwa im Bereich der horizontalen Mitte des Wälzlagergetriebes der Figur 1 geführt. Das Wälzlagergetriebe der Figur 2 unterscheidet sich von dem der Figur 1 im Wesentlichen durch eine andere Dimensionierung der einzelnen Bauelemente. Prinzipiell funktionsgleiche Bauelemente sind in der Figur 2 mit den gleichen Bezugszeichennummern wie in der Figur 1 bezeichnet. Auch hinsichtlich der Funktionsweise gilt das zur Figur 1 Ausgeführt bei der Figur 2 entsprechend fort. Der Übersichtlichkeit halber sind in der Figur 2 exemplarisch nur wenige Kugeln 19 dargestellt. Dabei zeigt die Figur 2 im oberen 11-Uhr-Bereich eine erste prinzipielle Ausführungsform und im rechten 4-Uhr-Bereich eine zweite prinzipielle Ausführungsform.

In besagtem 11-Uhr-Bereich ist zusätzlich zu den in der Figur 1 beschriebenen Zahnrädern 21, 22 und 23 ein weiteres erstes Zahnrad 21' entsprechend dem ersten Zahnrad 21 vorgesehen. Dieses weitere erste Zahnrad 21' kämmt wie das erste Zahnrad 21 einerseits mit dem dritten Zahnrad 23 und anderseits mit dem Zahnradbereich 11z am inneren Abrollflächenelement 11. Dabei ist diese Gruppe von vier Zahnrädern 21, 21', 22 und 23 mehrmals, beispielsweise dreimal in Umfangsrichtung verteilt am Wälzlagergetriebe vorgesehen. Mit dieser Ausbildung ist mit Vorteil eine hohe Momentenübertragungsfähigkeit von den ersten Zahnrädern 21 und 21' auf den Zahnradbereich 11z erzielbar, was beispielsweise bei der zur Figur 1 beschriebenen Antriebs-Abtriebs-Konstellation eine durchweg gute und hohe Momentenübertragungsfähigkeit sicherstellt.

In besagtem 4-Uhr-Bereich sind zusätzlich zu den in der Figur 1 beschriebenen Zahnrädern 21, 22 und 23 weitere zweite und dritte Zahnräder 22' und 23' entsprechend den zweiten und dritten Zahnrädern 22 und 23 vorgesehen. Das weitere zweite Zahnrad 22' kämmt wie das zweite Zahnrad 22 mit dem Zahnradbereich 13z am äußeren Abrollflächenelement 13. Das weitere dritte Zahnrad 23' kämmt dabei wie das dritte Zahnrad 23 mit dem ersten Zahnrad 21. Dabei ist diese Gruppe von fünf Zahnrädern 21, 22, 22', 23 und 23' mehrmals, beispielsweise dreimal in Umfangsrichtung verteilt am Wälzlagergetriebe vorgesehen. Auch diese Ausführungsform bietet eine besondere, von der ersten Ausführungsform abweichende Momentenübertragungsfähigkeit, die in Abhängigkeit von der jeweiligen Antriebs-Abtriebs-Konstellation mit besonderem Vorteil eingesetzt werden kann. In anderen Ausführungsformen sind natürlich auch Kombinationen der vorausgehend beschriebenen ersten und zweiten Ausführungsformen einsetzbar.

In anderen Ausführungen sind natürlich auch andere Wälzkörper als Kugeln beispielsweise Kegel- oder Zylinderrollen möglich. Weiterhin sind natürlich z.B. je nach Anwendungserfordernis einreihige oder auch mehr als zweireihige Wälzlagerungen möglich. Schließlich kann im Prinzip auch frei gewählt werden, über welches der Abrollflächenelemente an- und abgetrieben werden soll.

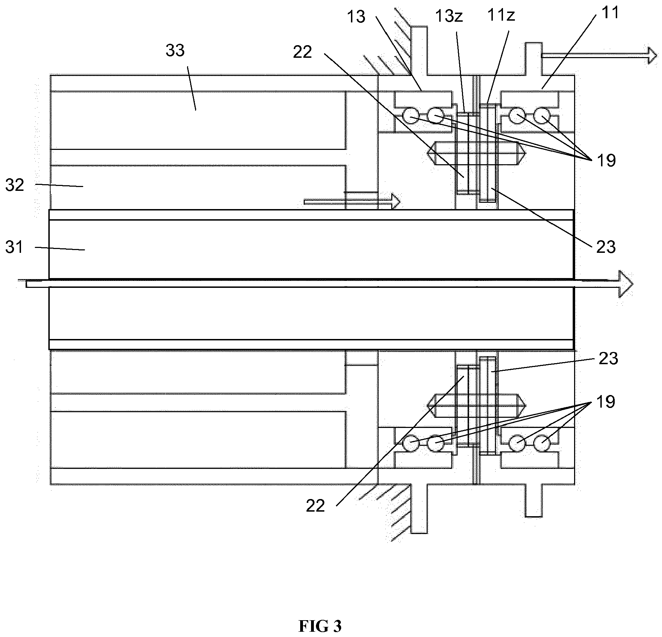

Die Figur 3 zeigt als ein Ausführungsbeispiel der Erfindung einen Längsschnitt durch ein Wälzlagergetriebe, wobei lediglich die Schnittflächen ohne Schraffur dargestellt sind. Prinzipiell funktionsgleiche Bauelemente sind dabei in der Figur 3 mit den gleichen Bezugszeichennummern wie in den Figuren 1 und 2 bezeichnet. Auch hinsichtlich der Funktionsweise gilt das zu den Figuren 1 und 2 Ausgeführt bei der Figur 3 entsprechend. Anders als bei den Figuren 1 und 2 sind beim Wälzlagergetriebe der Figur 3 die drei Abrollflächenelement 11, 12 und 13 nicht radial übereinander nach Art eines Dreiringlagers angeordnet sind, sondern das erste und dritte Abrollflächenelement 11 und 13 sind axial nebeneinander angeordnet.

Bei der Figur 3 sind das erste und das dritte Abrollflächenelement 11 und 13 wenigstens zweistückig ausgebildet, wobei eines der Stücke, das die Abrollbahnen für die Kugeln 19 aufweist, ein gängiger Außenrings eines zweireihigen Schrägkugellagers ist. Das zweite Abrollflächenelement 12 ist mehrstückig ausgebildet, wobei zwei der Stücke, die die Abrollbahnen für die Kugeln 19 aufweisen, gängig Innenringe von zweireihigen Schrägkugellagern sind. Durch diese Ausbildung können mit Vorteil im Wesentlichen katalogmäßige zweireihige Schrägkugellager verwendet werden.

Innerhalb des zweiten Abrollflächenelements 12 und axial zwischen den beiden Schrägkugellagern sind mehrere in Umfangsrichtung verteilt angeordnete und im Abrollflächenelement 12 drehbar gelagerte Paare von Zahnräder 22 und 23 vorgesehen. Bei jedem Paar sind die beiden Zahnräder 22 und 23 fest miteinander verbunden. Die Zahnräder 22 sind dabei derart angeordnet und ausgebildet, dass sie mit einem am dritten Abrollflächenelement 13 ausgebildeten innenverzahnten Zahnradbereich 13z kämmen, wohingegen die Zahnräder 23 derart angeordnet und ausgebildet sind, dass sie mit einem am ersten Abrollflächenelement 11 ausgebildeten innenverzahnten Zahnradbereich 11z kämmen.

Das zweite Abrollflächenelement 12 sitzt auf einer Hohlwelle 31. Mit der Hohlwelle 31 ist weiterhin ein Rotor 32 eines Elektromotors verbunden, wobei der Stator 33 des Elektromotors mit dem dritten bezüglich der anderen feststehenden Abrollflächenelement 13 verbunden ist. Damit ist über den Elektromotor die Hohlwelle 31und das mit ihr verbundene zweite Abrollflächenelement 12 antreibbar, wobei der Abtrieb über das erste Abrollflächenelement 11 erfolgt.

Dabei übersetzt das Wälzlagergetriebe der Figur 3 vom Antrieb hin zum Abrieb wie folgt: Durch das Drehen der Hohlwelle 31 werden die mit dem Zahnradbereich 13z des dritten Abrollflächenelement 13 kämmenden Zahnräder 22 in eine Rotation um ihre eigenen Drehachsen versetzt. Damit werden auch die Zahnräder 23 mitgedreht, deren Drehung über ihr Kämmen mit dem Zahnradbereich 11z das erste Abrollflächenelement 11 bewegt.

Ähnlich wie zur Anordnung der Figur 1 beschrieben können natürlich auch bei der Anordnung der Figur 3 auf der dem Getriebe abgewandten Seite des Elektromotors bei Bedarf eine nicht näher dargestellte Bremse, ebenfalls nicht näher dargestellte Sensoren zum Erfassen unterschiedlichster Größen wie auch andere Anbauelemente ergänzt sein.

## Patentansprüche

1. Wälzlagergetriebe, beinhaltend folgende Merkmale:
- Wenigstens ein erstes, zweites und drittes Abrollflächenelement mit Abrollbahnen, auf denen Wälzkörper zum Abrollen vorgesehen sind,
- wenigstens ein erster Satz von Wälzkörpern, der derart zwischen dem ersten und zweiten Abrollflächenelement angeordnet ist, dass die Abrollflächenelemente nach Art eines Wälzlagers gegeneinander drehbar sind,
- wenigstens ein zweiter Satz von Wälzkörpern, der derart zwischen dem zweiten und dritten Abrollflächenelement angeordnet ist, dass die Abrollflächenelemente nach Art eines Wälzlagers gegeneinander drehbar sind,
- das erste und das dritte Abrollflächenelement sind axial nebeneinander angeordnet,
- die beiden Abrollbahnen des zweiten Abrollflächenelements für die beiden Wälzkörpersätze sind auf ein und dergleichen radialen Seite des Abrollflächenelements angeordnet,
- jedes der Abrollflächenelemente ist ein Getriebeelement ausbildend oder wenigstens ein Getriebeelement lagernd gestaltet, und
- die Getriebeelemente sind derart angeordnet und als Zahnräder ausgebildet, dass sie nach Art eines Getriebes zusammenwirken.

2. Wälzlagergetriebe nach Anspruch 1, wobei der erste und/oder zweite Satz von Wälzkörpern als ein ein-, zwei- oder mehrreihiger Satz von Wälzkörpern ausgebildet ist und/oder die Wälzkörper als Kugeln oder Rollen, insbesondere als Kegel- oder Zylinderrollen, ausgebildet sind.

3. Wälzlagergetriebe nach einem der Ansprüche 1 oder 2, wobei der erste und/oder zweite Satz von Wälzkörpern und die zugehörigen Abrollflächenelemente nach Art eines zweireihigen Schrägkugellagers ausgebildet sind.

4. Wälzlagergetriebe nach einem der Ansprüche 1 bis 3, wobei die Wälzlager fettgeschmiert sind, zum Abdichten der die Wälzkörper beinhaltenden Räume Dichtelemente vorgesehen sind und/oder die Wälzkörper wenigstens einer der Sätze oder Reihen in einem Käfig angeordnet sind.

5. Wälzlagergetriebe nach einem der Ansprüche 1 bis 4, wobei ein Antrieb über eines der Abrollflächenelemente, ein Abtrieb über ein anderes der Abrollflächenelemente und das verbleibende der Abrollflächenelemente gegenüber den anderen als feststehend Bezugsbasis vorgesehen sind.

6. Wälzlagergetriebe nach einem der Ansprüche 1 bis 5, wobei das Getriebeelement als außen- oder innenverzahntes Einfach-, Doppel- oder Mehrfachzahnrad ausgebebildet ist.

7. Wälzlagergetriebe nach Anspruch 6, wobei das zweite Abrollflächenelement insbesondere in mehrstückiger Ausbildung, wenigstens ein Zahnrad, insbesondere ein Doppelzahnrad lagernd ausgebildet ist und das erste und das dritte Abrollflächenelement jeweils ein Zahnrad ausbildend gestaltet sind.

8. Wälzlagergetriebe nach Anspruch 7, wobei das zweite Abrollflächenelement ein weiteres mit dem wenigstens einen Zahnrad zusammenwirkendes Zahnrad lagernd gestaltet ist.

9. Wälzlagergetriebe nach einem der Ansprüche 7 oder 8, wobei in Umfangsrichtung des Abrollflächenelements verteilt mehrere Gruppen des im zweiten Abrollflächenelement gelagerten Zahnrads und ggf. des weiteren Zahnrads vorgesehen sind.

## Claims

1. Rolling-bearing transmission, including the following features:
- at least a first, second and third rolling-surface element having raceways, on which rolling elements are provided to roll,
- at least a first set of rolling elements, which is arranged between the first and second rolling-surface element in such a way that the rolling-surface elements are rotatable relative to each other in the manner of a rolling bearing,
- at least a second set of rolling elements, which is arranged between the second and third rolling-surface element in such a way that the rolling-surface elements are rotatable relative to each other in the manner of a rolling bearing,
- the first and the third rolling-surface element are arranged axially beside each other,
- the two raceways of the second rolling-surface element for the two rolling element sets are arranged on one and the same radial side of the rolling-surface element,
- each of the rolling-surface elements is configured to form a transmission element or support at least one transmission element, and
- the transmission elements are arranged and formed as gears in such a way that they interact in the manner of a transmission.

2. Rolling-bearing transmission according to Claim 1, wherein the first and/or second set of rolling elements is formed as a one-row, two-row or multi-row set of rolling elements and/or the rolling elements are formed as balls or rollers, in particular as tapered or cylindrical rollers.

3. Rolling-bearing transmission according to either of Claims 1 and 2, wherein the first and/or second set of rolling elements and the associated rolling-surface elements are formed in the manner of a two-row angled-contact ball bearing.

4. Rolling-bearing transmission according to one of Claims 1 to 3, wherein the rolling bearings are grease-lubricated, sealing elements are provided to seal off the spaces containing the rolling elements, and/or the rolling elements of at least one of the sets or rows are arranged in a cage.

5. Rolling-bearing transmission according to one of Claims 1 to 4, wherein a drive via one of the rolling-surface elements, an output via another of the rolling-surface elements and the remaining one of the rolling-surface elements with respect to the others as a fixed frame of reference are provided.

6. Rolling-bearing transmission according to one of Claims 1 to 5, wherein the transmission element is formed as an externally or internally toothed single, double or multiple gear.

7. Rolling-bearing transmission according to Claim 6, wherein the second rolling-surface element, in particular in a multi-part design, is designed to support at least one gear, in particular a double gear, and the first and the third rolling-surface element are each configured to form a gear.

8. Rolling-bearing transmission according to Claim 7, wherein the second rolling-surface element is configured to support a further gear interacting with the at least one gear.

9. Rolling-bearing transmission according to either of Claims 7 and 8, wherein a plurality of groups of the gear supported in the second rolling-surface element and, if appropriate, of the further gear are provided distributed in the circumferential direction of the rolling-surface element.

## Revendications

1. Transmission à palier à roulement, comprenant les caractéristiques suivantes :
- au moins un premier, un deuxième et un troisième élément de surface de roulement avec des chemins de roulement sur lesquels doivent rouler des corps de roulement,
- au moins un premier jeu de corps de roulement qui est disposé entre le premier et le deuxième élément de surface de roulement, de telle sorte que les éléments de surface de roulement puissent tourner l'un contre l'autre à la manière d'un palier à roulement,
- au moins un deuxième jeu de corps de roulement qui est disposé entre le deuxième et le troisième élément de surface de roulement de telle sorte que les éléments de surface de roulement puissent tourner l'un contre l'autre à la manière d'un palier à roulement,
- le premier et le troisième élément de surface de roulement sont disposés axialement l'un à côté de l'autre,
- les deux chemins de roulement du deuxième élément de surface de roulement pour les deux jeux de corps de roulement sont disposés sur un seul et même côté radial de l'élément de surface de roulement,
- chacun des éléments de surface de roulement est configuré de manière à constituer un élément de transmission ou à supporter au moins un élément de transmission, et
- les éléments de transmission sont disposés et réalisés sous forme de roues dentées de telle sorte qu'ils coopèrent à la manière d'une transmission.

2. Transmission à palier à roulement selon la revendication 1, dans laquelle le premier et/ou le deuxième jeu de corps de roulement sont réalisés sous forme de jeu de corps de roulement à une, deux ou plusieurs rangées et/ou les corps de roulement sont réalisés sous forme de billes ou de rouleaux, en particulier sous forme de rouleaux coniques ou cylindriques.

3. Transmission à palier à roulement selon l'une quelconque des revendications 1 et 2, dans laquelle le premier et/ou le deuxième jeu de corps de roulement et les éléments de surface de roulement associés sont réalisés à la manière d'un roulement à billes à contact oblique à deux rangées.

4. Transmission à palier à roulement selon l'une quelconque des revendications 1 à 3, dans laquelle les paliers à roulements sont lubrifiés avec de la graisse, des éléments d'étanchéité sont prévus pour réaliser l'étanchéité des espaces contenant les corps de roulement et/ou les corps de roulement d'au moins l'un des jeux ou l'une des rangées sont disposés dans une cage.

5. Transmission à palier à roulement selon l'une quelconque des revendications 1 à 4, dans laquelle un entraînement est prévu par le biais de l'un des éléments de surface de roulement, une prise de force est prévue par le biais d'un autre des éléments de surface de roulement et le reste des éléments de surface de roulement sont prévus en tant que base de référence fixe par rapport aux autres.

6. Transmission à palier à roulement selon l'une quelconque des revendications 1 à 5, dans laquelle l'élément de transmission est réalisé sous forme de roue dentée simple, double ou multiple à denture extérieure ou intérieure.

7. Transmission à palier à roulement selon la revendication 6, dans laquelle le deuxième élément de surface de roulement est réalisé notamment dans une réalisation en plusieurs pièces, en supportant au moins une roue dentée, en particulier une double roue dentée et le premier et le troisième élément de surface de roulement sont à chaque fois configurés de manière à constituer une roue dentée.

8. Transmission à palier à roulement selon la revendication 7, dans laquelle le deuxième élément de surface de roulement est configuré de manière à supporter une roue dentée supplémentaire coopérant avec l'au moins une roue dentée.

9. Transmission à palier à roulement selon l'une quelconque des revendications 7 et 8, dans laquelle il est prévu, de manière répartie dans la direction périphérique de l'élément de surface de roulement, plusieurs groupes de la roue dentée supportée dans le deuxième élément de surface de roulement et éventuellement de la roue dentée supplémentaire.
